# FASCICULE DE BREVET EUROPEEN

(11) **EP 1 008 379 B1**
(45) Date de publication et mention de la délivrance du brevet: **04.10.2006**
(21) Numéro de dépôt: 99402884.3
(22) Date de dépôt: 19.11.1999
(51) Int. Cl.: B01D 53/94, F01N 3/20, F02D 41/02

(54) **Procédé et dispositif d'élimination des oxydes d'azote dans une ligne d'échappement de moteur à combustion interne**
Verfahren und Vorrichtung zur Entfernung von Stickoxiden aus der Abgasleitung einer Brennkraftmaschine
Process and apparatus for removing nitrogen oxides from an exhaust passage of an internal comustion engine

(30) Priorité: 09.12.1998 FR 9815639
(43) Date de publication de la demande: 14.06.2000
(73) Titulaire: Institut Français du Pétrole, 92852 Rueil-Malmaison Cedex (FR)
(72) Inventeur: Bouchez, Mathias, 92190 Meudon (FR); Mabilon, Gil, 78420 Carrières sur Seine (FR); Martin, Brigitte, 69230 Saint Genis Laval (FR); Bourges, Patrick, 92500 Rueil-Malmaison (FR)

(56) Documents cités:
- EP-A- 0 814 248
- EP-A- 0 829 623
- EP-A- 0 899 431
- DE-A- 4 404 617
- US-A- 5 771 685

## Description

La présente invention concerne le domaine du traitement des gaz émis à l'échappement de moteurs à allumage commandé en mélange pauvre et de moteurs diesel.

De tels moteurs émettent en effet un certain nombre de polluants qu'il est nécessaire d'éliminer et ce d'autant plus efficacement que les normes se sévérisent notamment dans les pays industrialisés.

Parmi les polluants les plus nombreux et les plus gênants pour l'environnement, on peut citer les oxydes d'azote.

Il est connu d'éliminer ce type de polluants en faisant passer les gaz d'échappement à travers des catalyseurs (dits DéNO_{X}) destinés à convertir les oxydes d'azote. Ceci nécessite une post injection de réducteurs tels que des hydrocarbures par exemple. Les catalyseurs connus étant actifs sur une plage de température donnée, on peut être amené à disposer, dans le pot catalytique, plusieurs catalyseurs ayant des formulations différentes c'est-à-dire des plages d'activité différentes. On agrandit ainsi le domaine d'action des éléments catalytiques.

A titre illustratif, les formulations utilisées pour les basses températures sont de type Platine/Alumine ou Platine/Zéolithe. Les températures pour lesquelles ces catalyseurs sont les plus actifs sont de 200°C à 250°C.

Les catalyseurs dits "Hautes températures" sont actifs en général entre 300°C et 500°C. Ce sont par exemple des catalyseurs de type Cuivre/Zéolithe.

Cependant, dans ce contexte, un problème se pose lorsque les gaz d'échappement ne sont pas, au niveau du ou des catalyseurs, dans une plage de température pour laquelle la conversion des oxydes d'azote est suffisante.

L'efficacité globale de tels systèmes de post traitement reste cependant limitée. A titre d'exemple un catalyseur Platine/Alumine avec une post injection de gazole présente couramment une efficacité sur les oxydes d'azote inférieure à 50 %.

Il existe par ailleurs des catalyseurs sur lesquels les oxydes d'azote viennent s'adsorber sous différentes formes. A titre d'exemple les NO_{X} peuvent être stockés sous forme de nitrates ou s'insérer dans une structure oxyde. Ces catalyseurs sont couramment appelés "pièges à NO_{X}"

Le piège à NO_{X} de type "nitrate" est un catalyseur qui permet de stocker à sa surface, en milieu oxydant, des oxydes d'azote. Généralement il est composé d'un métal précieux déposé sur ou à proximité d'une masse basique qui est généralement un oxyde ou un mélange d'oxydes d'alcalins, d'alcalino terreux ou de terres rares. En mélange pauvre (excès d'oxygène), le NO (NO_{X} =NO+NO2) qui se trouve majoritairement dans les gaz d'échappement est oxydé par le métal précieux pour former du NO2. Ce NO2 migre à la surface du catalyseur pour s'adsorber ensuite sur l'oxyde et former un nitrate. Ces nitrates sont stables en milieu oxydant sur une très large plage de température. Pour désorber ces nitrates de la surface du catalyseur, il faut monter à haute température en milieu oxydant ou bien réaliser un mélange réducteur.

La régénération uniquement thermique du piège à NO_{X} ne permettant pas de traiter les oxydes d'azote réémis à l'échappement, un second catalyseur (type DéNO_{X} continue par exemple) est alors nécessaire pour les réduire.

La demande de brevet EP-A1-0 540 280 décrit une régénération thermique de ce type, avec un piège à NO_{X}, muni d'un système de réchauffage des gaz, suivi d'un catalyseur de réduction des oxydes d'azote. Les deux catalyseurs sont montés en dérivation de la ligne d'échappement principale. Selon ce document, un système de vanne permet de diminuer, lors des phases de déstockage du piège, la VVH (rapport entre le débit de gaz et le volume du catalyseur qui traduit le temps de contact des gaz avec le catalyseur). Ainsi le taux de conversion des NO_{X} sur le catalyseur de réduction des oxydes d'azote est amélioré. Néanmoins, avec cette configuration, la partie du flux gazeux passant par le conduit principal ne traverse pas le catalyseur de réduction des NO_{X}.

Une régénération par la richesse permet de réduire les NO_{X} désorbés par une catalyse de type trois voies en déposant sur le catalyseur un métal noble adéquat (rhodium par exemple).

Avec un moteur essence fonctionnant en mélange pauvre, la transition de pauvre à riche est compatible avec son mode de fonctionnement par contre avec un moteur Diesel, obtenir une richesse supérieure à 1 est plus difficile à mettre en oeuvre.

Une mise en oeuvre connue consiste à injecter des hydrocarbures dans la ligne d'échappement en amont du catalyseur, lorsque les nitrates doivent être désorbés du piège à NO_{X}. Le brevet US 5 201 802 illustre un mode de réalisation de ce type. Cependant, bien que cette méthode permette d'obtenir des richesses momentanément supérieures à 1, le mélange gazeux obtenu contient de l'oxygène en concentration important ce qui est pénalisant pour la régénération.

Un autre procédé connu consiste à réinjecter des gaz brûlés à l'admission, ceci à des taux très élevés et à gérer la richesse à l'admission moteur. Le document EP-A1-0 829 623 divulgue un procédé de ce type.

Un procédé connu (US 5 771 685) consiste à augmenter la richesse du mélange carburé de façon à augmenter la richesse de gaz d'échappement.

Ces dernières stratégies présentent l'inconvénient de perturber le fonctionnement du moteur et de rendre le contrôle moteur plus complexe.

La présente invention comprend une régénération d'un piège à NO_{X}, basée essentiellement sur la variation de la richesse des gaz d'échappement ; et qui ne perturbe pas le fonctionnement du moteur.

La régénération d'un piège à NO_{X} comprend ici à la fois le déstockage des NO_{X} et leur réduction, la réduction étant assurée par le piège à NO_{X}.

Il s'agit, plus précisément, de permettre la régénération du piège à NO_{X} en diminuant la concentration en oxygène et en augmentant les concentrations en monoxyde de carbone CO et en hydrogène H2 dans les gaz d'échappement en amont du piège à NO_{X}. CO et H2 étant par définition de bons réducteurs étant issus de l'oxydation partielle d'hydrocarbures post-injectés. Le monoxyde de carbone agit à la fois sur le déstockage et sur la réduction.

Ainsi la présente invention a pour objet un dispositif d'élimination des oxydes d'azote dans une ligne d'échappement de moteur à combustion interne fonctionnant en mélange pauvre, comprenant un moyen pour piéger les oxydes d'azote, un moyen pour régénérer lesdits oxydes d'azote lorsque le moyen de piégeage est saturé, un moyen de traitement des hydrocarbures disposé en amont du moyen de piégeage des oxydes d'azote, un moyen d'injection d'hydrocarbures placé en amont du moyen de traitement des hydrocarbures, un moyen de mesure de la richesse des gaz.

Conformément à l'invention, le moyen de traitement des hydrocarbures est un catalyseur d'oxydation partielle (ou ménagée) des hydrocarbures qui coopère avec ledit moyen pour piéger les oxydes d'azote qui permet d'obtenir à sa sortie des gaz ayant une faible concentration en oxygène (O₂) et de fortes concentrations en monoxyde de carbone (CO) ainsi qu'en hydrogène (H₂) ; le dispositif selon l'invention comprend en outre un moyen destiné à enregistrer et à traiter les données issues des différents capteurs et/ou mémorisées de sorte que l'on réalise une régénération efficace du piège à NO_{X} sans perturber le fonctionnement du moteur.

Selon un mode de réalisation de l'invention, le moyen d'injection d'hydrocarbures, le moyen de traitement des hydrocarbures et le moyen de piégeage de NO_{X} sont disposés dans cet ordre et en série relativement au sens de circulation des gaz dans la ligne d'échappement.

Selon un mode particulier de réalisation de l'invention, le moyen d'injection d'hydrocarbures, le moyen de traitement des hydrocarbures et le moyen de piégeage des NO_{X} sont disposés dans la ligne principale d'échappement elle-même.

Conformément à une autre possibilité, le moyen d'injection d'hydrocarbures, le moyen de traitement des hydrocarbures et le moyen de piégeage des NO_{X} sont disposés dans une dérivation de la ligne principale d'échappement, le dispositif selon l'invention comprenant alors un moyen pour moduler le débit des gaz entre ladite dérivation et la ligne principale.

Sans sortir du cadre de l'invention, un moyen d'injection d'hydrocarbures, un moyen de traitement des hydrocarbures et un moyen de piégeage des oxydes d'azote peuvent être ainsi disposés à la fois dans la dérivation et dans la ligne principale, avec un moyen pour moduler le débit des gaz entre ladite dérivation et la ligne principale.

En outre, le dispositif selon l'invention peut comprendre au moins un capteur de température qui peut être disposé en amont dudit moyen de traitement des hydrocarbures.

Par ailleurs, le dispositif selon l'invention peut comprendre un moyen de mesure de la quantité de NO_{X} piégés dans le moyen de piégeage, disposé en aval de ce dernier.

En outre, un deuxième capteur de température peut être placé dans la ligne d'échappement, en aval du moyen de traitement des hydrocarbures.

De façon particulière, le moyen de mesure de la richesse des gaz d'échappement peut être disposé en aval du moyen de piégeage des NO_{X}.

Sans sortir du cadre de l'invention, le moyen de mesure de la richesse des gaz d'échappement peut être disposé entre le moyen de traitement des hydrocarbures et le moyen de piégeage des NO_{X}.

Par ailleurs, la ligne d'échappement peut comprendre un moyen de préchauffage des gaz placé en amont du moyen de traitement des hydrocarbures.

La présente invention vise en outre un procédé d'élimination des oxydes d'azote dans une ligne d'échappement d'un moteur à combustion interne fonctionnant en mélange pauvre, caractérisé en ce qu'il consiste à :
- piéger les NOx dans un moyen approprié;
- injecter des hydrocarbures dans la ligne d'échappement en fonction de différents paramètres de fonctionnement du moteur et de l'état de saturation d'un moyen de piégeage des NO_{X};
- oxyder partiellement les hydrocarbures dans un moyen spécifique afin d'obtenir le maximum de CO et H₂ ;
- régénérer ledit moyen de piégeage des NO_{X} grâce aux produits d'oxydation des hydrocarbures, notamment le CO et H₂ ;

Selon un aspect de l'invention, on surveille la quantité de NO_{X} stockée dans le moyen de piégeage des NO_{X}.

Conformément à un autre aspect de l'invention, on surveille la température des gaz en amont et/ou en aval du moyen de traitement des hydrocarbures.

Par ailleurs, on surveille la richesse des gaz en amont et/ou en aval du moyen de piégeage des NO_{X}.

De façon avantageuse, l'on injecte lesdits hydrocarbures additionnels lorsque le moyen de piégeage des NO_{X} est saturé, la température (T1) des gaz d'échappement est supérieure à une valeur de seuil (T_{R}) pour laquelle le moyen de traitement des hydrocarbures est actif, de façon à ce que la richesse (λ) des gaz d'échappement soit supérieure ou égale à une richesse donnée (λ_{R}) qui déclenche la régénération du moyen de piégeage.

Plus précisément, on injecte lesdits hydrocarbures pendant une durée (d_{R}) inférieure à une durée mémorisée, prédéterminée (d_{RMAX}).

Selon un aspect avantageux de l'invention, l'on module le débit des gaz d'échappement entre une voie principale et une dérivation de ladite voie.

Ainsi, l'on réchauffe en outre les gaz d'échappement avant leur oxydation partielle dans ladite dérivation.

De façon particulière, l'on arrête la régénération en fonction de l'information donnée par un capteur tel qu'une sonde de richesse, placé en aval du moyen de piégeage des NO_{X}.

D'autres avantages, caractéristiques, détails de l'invention apparaîtront mieux à la lecture de la description qui va suivre, faite à titre illustratif et nullement limitatif en référence aux dessins annexés sur lesquels :
- La figure 1 est un schéma d'une ligne d'échappement selon un mode de réalisation de l'invention;
- La figure 2 est un schéma de l'organisation des données nécessaires au procédé selon l'invention;
- La figure 3 est un organigramme relatif à un procédé de régénération d'un piège à NO_{X} selon le premier mode de réalisation de l'invention;
- La figure 4 est un schéma d'une ligne d'échappement selon un deuxième mode de réalisation de l'invention;
- La figure 5 est une illustration de l'organisation des données selon le deuxième mode de réalisation de l'invention; et

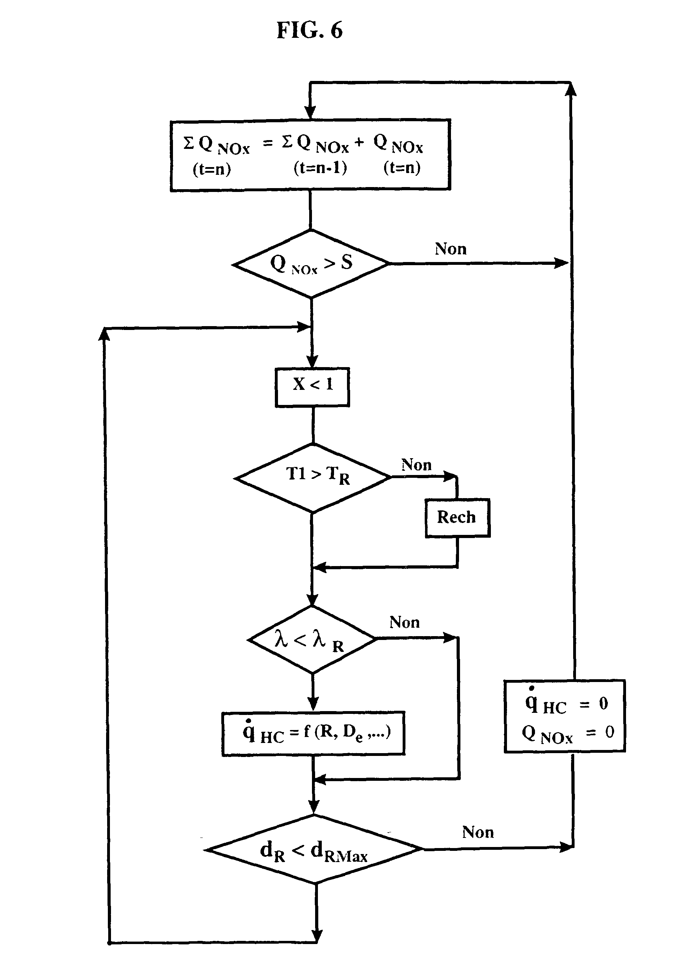

- La figure 6 est un organigramme relatif au procédé de régénération d'un piège à NO_{X} selon le deuxième mode de réalisation de l'invention.

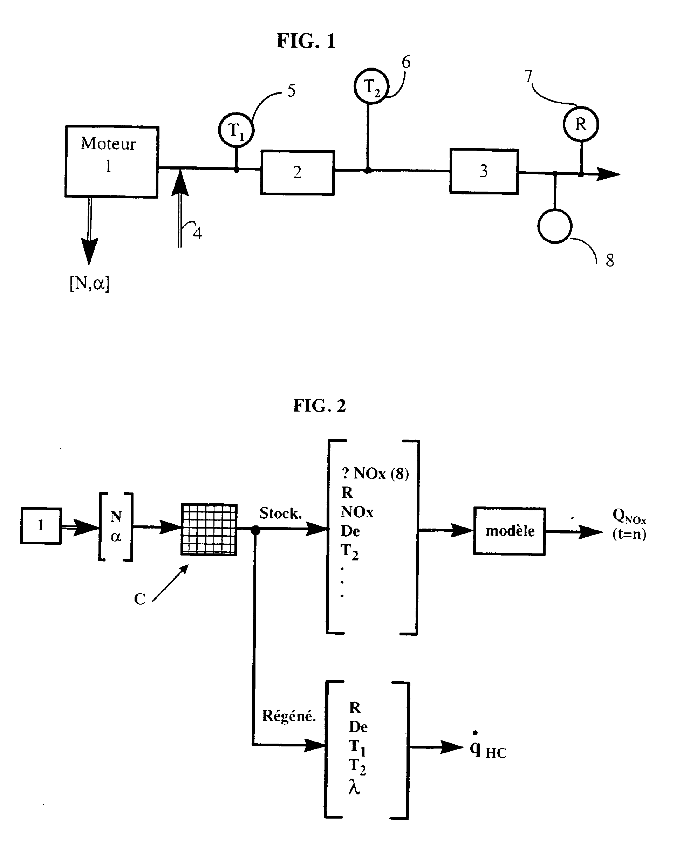

Selon le mode de réalisation de l'invention illustré par la figure 1, la ligne d'échappement du moteur 1 comprend essentiellement : un premier catalyseur 2 dénommé ci-après catalyseur d'oxydation ménagée qui permet de réaliser une oxydation partielle des hydrocarbures en monoxyde de carbone (CO) et en hydrogène (H₂).

Un deuxième catalyseur 3 est placé dans la ligne principale d'échappement en aval du premier catalyseur 2 relativement au sens de propagation des gaz dans la ligne d'échappement. Ce deuxième catalyseur 3 est un "piège à NO_{X}" dont le mode de régénération (déstockage et réduction) se fait par la richesse.

Par ailleurs un moyen 4 d'injection d'hydrocarbures est prévu pour une post-injection ; le moyen 4 est disposé en amont des deux catalyseurs 2, 3. Cette post-injection peut être assurée par le système d'injection du moteur si cela est possible : un système d'injection de type common-rail, bien connu des spécialistes, peut ainsi assurer une telle post-injection à l'échappement. Un système d'injection spécifique, annexe à l'injection dans le moteur lui-même, peut aussi être prévu sans sortir du cadre de l'invention.

En outre, au moins un capteur de température peut être nécessaire à la mise en oeuvre de l'invention.

Dans le mode de réalisation de la figure 1, deux capteurs de température 5, 6 sont prévus : l'un 5 situé en amont du catalyseur d'oxydation ménagée 2 ; le deuxième capteur de température 6 est placé entre le catalyseur 2 et le piège à NO_{X} 3.

Le capteur 5 permet de savoir si la température des gaz est suffisante pour oxyder les hydrocarbures injectés dans la phase de régénération du piège à NO_{X} 3.

Le capteur de température 6 donne la température à laquelle sont stockés les NO_{X} en mélange pauvre et permet, lors de la régénération, de connaître la variation de température due à la post-injection d'hydrocarbures.

En aval du piège à NO_{X}3, peut être implanté un capteur de NO_{X}8 destiné à évaluer la quantité de NO_{X} stockée, à un instant donné, dans le piège à NO_{X} 3.

Enfin une sonde de richesse 7 peut être placée entre le premier et le deuxième catalyseur ; cette sonde de richesse 7 est préférentiellement être disposée en aval du piège à NO_{X} 3.

Le fonctionnement d'une ligne d'échappement telle qu'elle vient d'être décrite structurellement est globalement le suivant :

Lorsque le moteur fonctionne en mélange pauvre, le catalyseur ou piège à NO_{X} 3 stocke tout ou partie des NO_{X} émis par le moteur 1. La fraction de NO_{X} stockée sur le catalyseur à l'instant t dépend à la fois de l'état de saturation dans lequel se trouve le piège à NO_{X} 3 (c'est-à-dire ce qu'il a pu stocker jusqu'à l'instant t) et des conditions de température, de débit, de concentration en NO_{X}, de richesse des gaz d'échappement. La quantité de NO_{X} stockée sur le catalyseur peut être estimée, soit à partir de données issues des cartographies du moteur, et d'un modèle mathématique ou éventuellement à l'aide du capteur de NO_{X} 8 placé en aval du piège à NO_{X} 3. Lorsque la quantité de NO_{X} stockée sur le catalyseur 3 atteint une valeur seuil S, la procédure de régénération est activée. On détermine en fonction des paramètres issus des cartographies du moteur comme la richesse et le débit des gaz d'échappement, la quantité d'hydrocarbures qui doit être post injectée afin d'obtenir momentanément une richesse supérieure à 1 dans la ligne d'échappement. On peut utiliser à cet effet la sonde de richesse proportionnelle 7 placée par exemple en aval du catalyseur d'oxydation ménagée 2 afin de boucler sur la consigne de post injection. Par ailleurs le capteur de température 5 placé en amont du premier catalyseur 2 indique si la température des gaz qui arrivent sur le catalyseur d'oxydation ménagée 2 est suffisante et donc s'il faut activer la post injection. Le catalyseur d'oxydation ménagée 2 consomme alors l'oxygène contenu dans les gaz d'échappement pour former notamment du monoxyde de carbone (CO) et de l'hydrogène (H₂), deux éléments qui favorisent la régénération du piège à NO_{X} 3.

La figure 2 est un résumé des paramètres utilisés selon l'invention. On voit que le moteur 1 fournit deux types de données : le régime-moteur (N) et la position de l'accélérateur (α). A partir de ces données une cartographie C mémorisée par exemple dans une unité de contrôle électronique permet de déterminer d'autres paramètres tels que la richesse R en sortie moteur, le taux de NO_{X} en sortie moteur et le débit à l'échappement.

D'autres données, mesurées par le ou les capteurs de température 5, 6 ou le capteur de NO_{X} 8, permettent, en phase de stockage des NO_{X} de déterminer la quantité de NO_{X} stockée (Q NO_{X}) à un instant donné (t = n) si elles sont associées aux premières données.

Un modèle mathématique est utilisé à la place ou additionnellement au capteur de NO_{X} 8, pour déterminer la concentration des NO_{X} dans les gaz.

Si un capteur 8 est utilisé additionnellement au modèle mathématique, il est alors possible d'ajuster en permanence les paramètres du modèle afin de suivre le comportement réel des catalyseurs dans la ligne d'échappement; ainsi on peut par exemple prendre en compte le vieillissement des catalyseurs.

En phase de régénération, la cartographie C fournit les mêmes données qu'en phase de stockage qui, associées aux mesures de température et de richesse, permettent de déterminer le débit d'hydrocarbures à injecter à l'échappement.

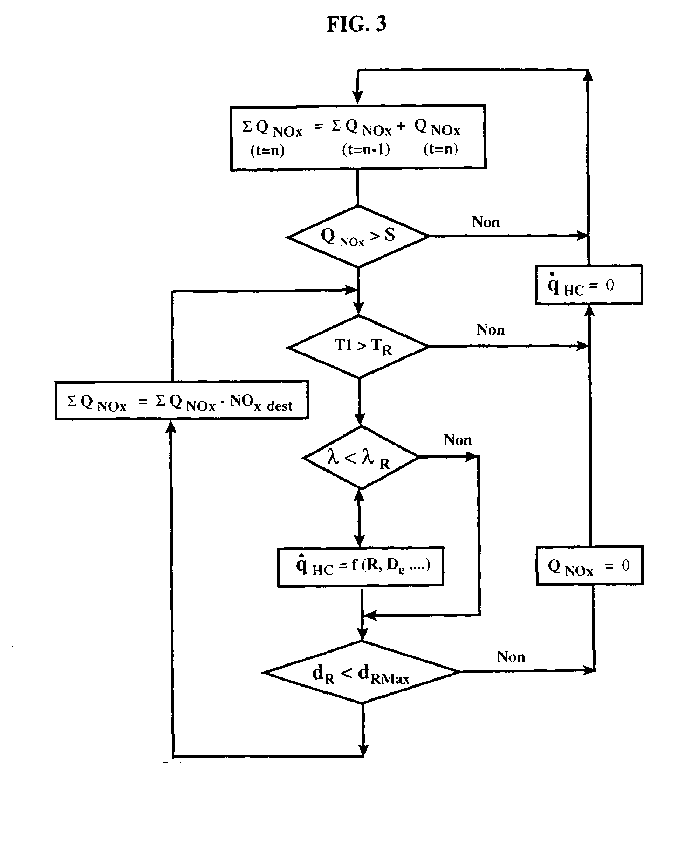

La figure 3 est un organigramme des différentes étapes conduisant ou non à la régénération du piège à NO_{X} 3.

Il apparaît que l'on surveille en permanence la quantité de NO_{X} (Q NO_{X}) stockée dans le piège à NO_{X} ; si cette valeur atteint un certain seuil S mémorisé dans une unité de contrôle électronique, alors on vérifie la température T₁ des gaz en amont du premier catalyseur 2 ; si cette température est supérieure à un seuil T_{R} qui correspond à la température minimum pour laquelle le premier catalyseur 2 est actif alors on s'intéresse à la richesse λ des gaz en aval du premier catalyseur 2.

La quantité d'hydrocarbures post-injectée est liée à la différence entre la richesse R des gaz en sortie moteur et la richesse-seuil λ_{R} nécessaire à la régénération.

En fin de régénération, on arrête l'injection d'hydrocarbures puis on recommence le processus de stockage des NO_{X}.

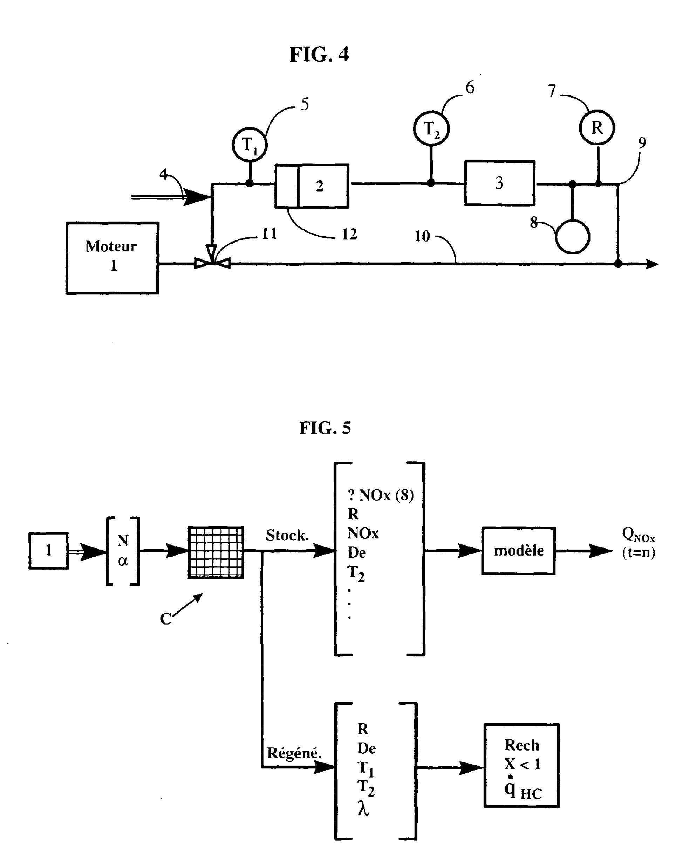

La figure 4 concerne un deuxième mode de réalisation de l'invention qui diffère du premier par le fait que le moyen d'injection 4, les catalyseurs 2, 3 ainsi que les différents capteurs de température 5, 6, de richesse 7 ou de NO_{X} 8 sont disposés non pas dans la ligne principale d'échappement 10 mais dans une dérivation 9. Une vanne ou tout autre moyen destiné à moduler le débit principal des gaz d'échappement issus du moteur 1, est disposé à la source du by-pass 9.

Cette configuration permet, par rapport à la première, de limiter le débit des gaz qui traverse les catalyseurs lors de la régénération du piège. On diminue ainsi la quantité d'hydrocarbures à post injecter pour passer à richesse supérieure à 1.

Pendant la phase de stockage des NO_{X} sur le piège à NO_{X}, la totalité des gaz d'échappement passe par le conduit comportant les catalyseurs. La post injection d'hydrocarbure n'est pas activée.

L'estimation de la quantité de NO_{X} stockée sur le catalyseur est identique à ce qui a été décrit ci-dessus. Lorsque la phase de régénération est activée, une partie des gaz est by passée grâce au moyen de vannage. On limite ainsi le débit qui traverse les catalyseurs ce qui permet de diminuer la VVH (Vitesse Volumique Horaire = Débit de gaz/Volume du catalyseur). La quantité d'hydrocarbures post injectée est fonction de la richesse des gaz d'échappement (fournie par les cartographies moteur) et de la fraction de débit bypassée. La fraction de débit X dans la dérivation 9 est fonction du débit total des gaz et de la position de la vanne 11 en tête de la dérivation 9. Comme précédemment, on peut utiliser une sonde de richesse proportionnelle placée en aval du catalyseur d'oxydation ménagée ou du piège à NO_{X} 3 afin de boucler sur la quantité d'hydrocarbures post injectée.

Selon encore un autre mode de réalisation de l'invention, la ligne d'échappement peut comprendre en outre un moyen 12 de chauffage des gaz d'échappement, disposé selon la figure 4 dans la dérivation 9, juste en amont du catalyseur d'oxydation ménagée 2.

Le principe de fonctionnement de ce mode de réalisation de l'invention est globalement le même que celui qui vient d'être décrit.

Les avantages du troisième mode de réalisation de l'invention peut être résumé de la façon suivante :

Comme il a été dit précédemment, la post injection d'hydrocarbures et donc la régénération du piège à NO_{X} 3 est assujettie au niveau de température des gaz qui traversent les catalyseurs 2 et 3. Ainsi, si ce niveau est insuffisant, la régénération du piège 3 ne peut être activée au détriment de l'efficacité globale du système. Il peut donc être intéressant d'adjoindre au système précédent, le dispositif 12 permettant de réchauffer les gaz afin d'élever le niveau de température lors des régénérations lorsque celui-ci est trop faible. Les capteurs de température 5, 6 placés respectivement en amont et en aval du catalyseur d'oxydation ménagée 2 permettent de gérer le système de réchauffage des gaz. L'intérêt du by pass 9 est alors double : diminuer la quantité d'hydrocarbures à post injecter pour passer à richesse supérieure à 1 et limiter l'énergie à dépenser pour réchauffer la fraction des gaz qui traverse le catalyseur 2.

D'une façon générale, l'intérêt de l'invention est de consommer, lors de la régénération du piège à NO_{X}, l'oxygène contenue dans les gaz d'échappement par les hydrocarbures post injectés sur le catalyseur d'oxydation ménagée 2, et de former du monoxyde de carbone CO et de l'hydrogène H2 en amont du piège à NO_{X} 3. On obtient ainsi, lors d'une post injection d'hydrocarbures, un mélange en amont du piège à NO_{X} qui est à richesse supérieure à 1, pauvre en oxygène et riche en CO et H2 ce qui est favorable à la fois à la désorption des nitrates et à la réduction sur le moyen (3) des NO_{X} désorbés. Une amélioration notable de la phase de régénération du piège NO_{X} 3 est ainsi obtenue.

## Revendications

1. Dispositif d'élimination des oxydes d'azote dans une ligne d'échappement de moteur (1) à combustion interne fonctionnant en mélange pauvre, comprenant un moyen (3) pour piéger les oxydes d'azote, un moyen pour régénérer lesdits oxydes d'azote lorsque le moyen de piégeage est saturé, un moyen (2) de traitement des hydrocarbures disposé en amont du moyen (3) de piégeage des oxydes d'azote, un moyen (4) d'injection d'hydrocarbures additionnels placé en amont du moyen (2) de traitement des hydrocarbures, un moyen (7) de mesure de la richesse des gaz, **caractérisé en ce que** ledit moyen (4) d'injection d'hydrocarbures additionnels est disposé sur la ligne d'échappement et **en ce que** le moyen (2) de traitement des hydrocarbures est un catalyseur d'oxydation partielle (ou ménagée) des hydrocarbures injectés qui permet d'obtenir à sa sortie des gaz ayant une faible concentration en oxygène (O₂) et de fortes concentrations en monoxyde de carbone (CO) ainsi qu'en hydrogène (H₂), et **en ce qu'**il comprend en outre un moyen destiné à enregistrer et à traiter les données issues des différents capteurs et/ou mémorisées de sorte que l'on réalise une régénération efficace du piège à NO_{X} (3) sans perturber le fonctionnement du moteur.

2. Dispositif selon la revendication 1, **caractérisé en ce que** le moyen (4) d'injection d'hydrocarbures, le moyen (2) de traitement des hydrocarbures et le moyen (3) de piégeage de NO_{X} sont disposés dans la ligne d'échappement dans cet ordre et en série relativement au sens de circulation des gaz.

3. Dispositif selon la revendication 2, **caractérisé en ce que** le moyen (4) d'injection d'hydrocarbures, le moyen (2) de traitement des hydrocarbures et le moyen (3) de piégeage des NO_{X} sont disposés dans la ligne principale d'échappement elle-même.

4. Dispositif selon l'une quelconque des revendications 1 à 3, **caractérisé en ce que** le moyen (4) d'injection d'hydrocarbures, le moyen (2) de traitement des hydrocarbures et le moyen (3) de piégeage des NO_{X} sont disposés dans une dérivation (9) de la ligne principale d'échappement, et **en ce qu'**il comprend en outre un moyen (11) pour moduler le débit des gaz entre ladite dérivation (9) et la ligne principale (10).

5. Dispositif selon l'une quelconque des revendications précédentes, **caractérisé en ce qu'**il comprend en outre au moins un capteur de température (5).

6. Dispositif selon la revendication 5, **caractérisé en ce que** ledit capteur de température (5) est disposé en amont dudit moyen (2) de traitement des hydrocarbures.

7. Dispositif selon l'une quelconque des revendications précédentes, **caractérisé en ce qu'**il comprend en outre un moyen (8) de mesure de la quantité de NO_{X} piégés dans le moyen de piégeage (3) disposé en aval du moyen (3) de piégeage des NO_{X},

8. Dispositif selon l'une quelconque des revendications précédentes, **caractérisé en ce qu'**il comprend un deuxième capteur de température (6) placé en aval dudit moyen (2) de traitement des hydrocarbures.

9. Dispositif selon l'une quelconque des revendications 7 ou 8, **caractérisé en ce que** le moyen (7) de mesure de la richesse des gaz d'échappement est disposé en aval du moyen (3) de piégeage des NO_{X}.

10. Dispositif selon l'une quelconque des revendications 7 à 8, **caractérisé en ce que** le moyen (7) de mesure de la richesse des gaz d'échappement est disposé entre le moyen (2) de traitement des hydrocarbures et le moyen (3) de piégeage des NO_{X}.

11. Dispositif selon la revendication 10, **caractérisé en ce que** le moyen (7) de mesure de la richesse des gaz est placé en amont du deuxième capteur de température (6).

12. Dispositif selon l'une quelconque des revendications précédentes, **caractérisée en ce qu'**il comprend en outre un moyen (12) de préchauffage des gaz placé en amont du moyen (2) de traitement des hydrocarbures.

13. Procédé d'élimination des oxydes d'azote dans une ligne d'échappement d'un moteur (1) à combustion interne fonctionnant en mélange pauvre, **caractérisé en ce qu'**il consiste à :
- piéger les NO_{X} dans un moyen approprié (3);
- injecter des hydrocarbures additionnels dans la ligne d'échappement par un moyen d'injection (4) disposé sur la ligne d'échappement en fonction de différents paramètres de fonctionnement du moteur et de l'état de saturation dudit moyen (3) de piégeage des NO_{X};
- oxyder partiellement les hydrocarbures dans un moyen spécifique (2);
- régénérer ledit moyen de piégeage des NO_{X} (3) par les produits d'oxydations des hydrocarbures injectés.

14. Procédé selon la revendication 13, **caractérisé en ce que** l'on surveille la quantité de NO_{X} stockée dans le moyen (3) de piégeage des NOₓ.

15. Procédé selon l'une quelconque des revendications 13 ou 14, **caractérisé en ce que** l'on surveille la température des gaz en amont et/ou en aval du moyen (2) de traitement des hydrocarbures.

16. Procédé selon l'une quelconque des revendications 13 à 15, **caractérisé en ce que** l'on surveille la richesse des gaz en amont et/ou en aval du moyen (3) de piégeage des NO_{X}.

17. Procédé selon l'une quelconque des revendications 13 à 16, **caractérisé en ce que** l'on injecte lesdits hydrocarbures additionnels lorsque le moyen (3) de piégeage des NO_{X} est saturé, la température (T1) des gaz d'échappement est supérieure à une valeur de seuil (T_{R}) pour laquelle le moyen (2) de traitement des hydrocarbures est actif, de façon à ce que la richesse (λ) des gaz d'échappement soit supérieure ou égale à une richesse donnée (λ_{R}) qui déclenche la régénération du moyen de piégeage (3).

18. Procédé selon l'une quelconque des revendications 13 à 17, **caractérisé en ce que** l'on injecte lesdits hydrocarbures pendant une durée (d_{R}) inférieure à une durée mémorisée, prédéterminée (d_{RMAX}).

19. Procédé selon l'une quelconque des revendications 13 à 18, **caractérisé en ce que** l'on module le débit des gaz d'échappement entre une voie principale (10) et une dérivation (9) de ladite voie (10).

20. Procédé selon la revendication 19, **caractérisé en ce que** l'on réchauffe les gaz d'échappement avant leur oxydation partielle dans ladite dérivation (9).

21. Procédé selon l'une quelconque des revendications 13 à 20, **caractérisé en ce que** l'on arrête la régénération en fonction de l'information donnée par un capteur tel qu'une sonde de richesse, placé en aval du moyen (3) de piégeage des NO_{X}.

## Claims

1. A device for removing nitrogen oxides in an exhaust line of an internal combustion engine (1) operating with a lean mixture, including a nitrogen oxide trapping means (3), a means for regenerating said nitrogen oxides when the trapping means is saturated, a hydrocarbon processing means (2) arranged upstream of the nitrogen oxide trapping means (3), a means (4) for injecting additional hydrocarbons placed upstream of the hydrocarbon processing means (2) and a gas content measuring means (7), **characterised in that** said means (4) for injecting additional hydrocarbons is arranged on the exhaust line and **in that** the hydrocarbon processing means (2) is a partial (or controlled) oxidation catalytic converter for the injected hydrocarbons which enables there to be obtained, at its exit, gases having a low oxygen (O₂) concentration and high carbon monoxide (CO) and hydrogen (H₂) concentrations, and **in that** it further includes a means intended to record and process the data coming from the different sensors and/or which is stored such that an effective regeneration of the NO_{X} trap (3) is carried out without interfering with the operation of the engine.

2. The device according to Claim 1, **characterised in that** the hydrocarbon injection means (4), the hydrocarbon processing means (2) and the NO_{X} trapping means (3) are arranged in the exhaust line in this order and in series, in the direction of circulation of the gases, in relative terms.

3. The device according to Claim 2, **characterised in that** the hydrocarbon injection means (4), the hydrocarbon processing means (2) and the NO_{X} trapping means (3) are arranged in the main exhaust line itself.

4. The device according to any one of Claims 1 to 3, **characterised in that** the hydrocarbon injection means (4), the hydrocarbon processing means (2) and the NO_{X} trapping means (3) are arranged in a branch conduit (9) of the main exhaust line, and **In that** it further includes a means (11) for modulating the throughput of the gases between said branch conduit (9) and the main line (10).

5. The device according to any one of the preceding claims, **characterised in that** it further Includes at least one temperature sensor (5).

6. The device according to Claim 5, **characterised in that** said temperature sensor (5) is arranged upstream of said hydrocarbon processing means (2).

7. The device according to any one of the preceding claims, **characterised in that** it further includes a means (8) for measuring the quantity of NO_{X} trapped in the trapping means (3) which means (8) is arranged downstream of the NO_{X} trapping means (3).

8. The device according to any one of the preceding claims, **characterised in that** it includes a second temperature sensor (6) placed downstream of said hydrocarbon processing means (2).

9. The device according to any one of Claims 7 or 8, **characterised in that** the exhaust gas content measuring means (7) is arranged downstream of the NO_{X} trapping means (3).

10. The device according to any one of Claims 7 to 8, **characterised in that** the exhaust gas content measuring means (7) is arranged between the hydrocarbon processing means (2) and the NO_{X} trapping means (3).

11. The device according to Claim 10, **characterised in that** the gas content measuring means (7) is placed upstream of the second temperature sensor (6).

12. The device according to any one of the preceding claims, **characterised in that** it further includes a gas preheating means (12) which is placed upstream of the hydrocarbon processing means (2).

13. A method for removing nitrogen oxides in an exhaust line of an internal combustion engine (1) operating with a lean mixture, **characterised in that** it consists in:
- trapping the NO_{X} in an appropriate means (3);
- injecting additional hydrocarbons into the exhaust line using an injection means (4) arranged on the exhaust line, according to the different operating parameters of the engine and the saturation status of said NO_{X} trapping means (3);
- partially oxidising the hydrocarbons in a specific means (2);
- regenerating said NO_{X} trapping means (3) using the products of oxidisations of the injected hydrocarbons.

14. The method according to Claim 13, **characterised in that** the quantity of NO_{X} collected in the NO_{X} trapping means (3) is monitored.

15. The method according to any one of Claims 13 or 14, **characterised in that** the temperature of the gases upstream and/or downstream of the hydrocarbon processing means (2) Is monitored.

16. The method according to any one of Claims 13 to 15, **characterised in that** the gas content upstream and/or downstream of the NO_{X} trapping means (3) is monitored.

17. The method according to any one of Claims 13 to 16, **characterised in that** said additional hydrocarbons are injected when the NO_{X} trapping means (3) is saturated, the temperature (T1) of the exhaust gases is higher than a threshold value (T_{R}) for which the hydrocarbon processing means (2) is active, such that the exhaust gas content (λ) is higher than or equal to a given content (λ_{R}) which triggers the regeneration of the trapping means (3).

18. The method according to any one of Claims 13 to 17, **characterised in that** said hydrocarbons are injected over a duration (d_{R}) which is less than a stored, predetermined duration (d_{RMAX}).

19. The method according to any one of Claims 13 to 18, **characterised in that** the throughput of the exhaust gases is modulated between a main path (10) and a branch conduit (9) of said path (10).

20. The method according to Claim 19, **characterised In that** the exhaust gases are heated before they are partially oxidised in said branch conduit (9).

21. The method according to any one of Claims 13 to 20, **characterised in that** the regeneration is stopped according to the information given by a sensor such as a content probe, placed downstream of the NO_{X} trapping means (3).

## Patentansprüche

1. Vorrichtung zur Beseitigung von Stickoxiden in einer Abgasleitung (1) für Verbrennungsmotoren, welche mit magerem Gemisch laufen, umfassend ein Mittel (3) zum Einfangen von Stickoxiden, ein Mittel zum Regenerieren der besagten Stickoxide, wenn das Mittel zum Einfangen gesättigt ist, ein Mittel (2) zur Behandlung von Kohlenwasserstoffen, welches stromaufwärts des Mittels (3) zum Einfangen der Stickoxide vorgesehen ist, ein Mittel (4) zum Einspritzen von zusätzlichen Kohlenwasserstoffen, welches stromaufwärts des Mittels (2) zur Behandlung der Kohlenwasserstoffe angeordnet ist, ein Mittel (7) zum Messen des Gehalts der Gase, **dadurch gekennzeichnet, dass** das besagte Mittel (4) zum Einspritzen von zusätzlichen Kohlenwasserstoffen in der Abgasleitung vorgesehen ist und dass das Mittel (2) zur Behandlung von Kohlenwasserstoffen ein Katalysator mit partieller (oder schonender) Oxidierung der eingespritzten Kohlenwasserstoffe ist, welcher es ermöglicht, an dessen Ausgang Gase zu erhalten, welche eine niedrige Sauerstoffkonzentration (O₂) und hohe Konzentrationen an Kohlenmonoxid (CO) sowie an Wasserstoff (H₂) haben, und dass sie außerdem ein Mittel zum Aufzeichnen und zum Verarbeiten der aus den verschiedenen Aufnehmern stammenden und/oder gespeicherten Daten umfasst, damit man eine effiziente Regenierung der NOₓ-Falle (3) erhält, ohne den Betrieb des Motors zu stören.

2. Vorrichtung gemäß dem Anspruch 1, **dadurch gekennzeichnet, dass** das Mittel (4) zum Einspritzen von Kohlenwasserstoffen, dass Mittel (2) zur Behandlung von Kohlenwasserstoffen und das Mittel (3) zum Einfangen der NOₓ in der Abgasleitung in Bezug auf die Strömungsrichtung der Gase in dieser Reihenfolge und in Serie vorgesehen sind.

3. Vorrichtung gemäß dem Anspruch 2, **dadurch gekennzeichnet, dass** das Mittel (4) zum Einspritzen von Kohlenwasserstoffen, das Mittel (2) zur Behandlung von Kohlenwasserstoffen und das Mittel (3) zum Einfangen von NOₓ in der Hauptabgasleitung selber vorgesehen sind.

4. Vorrichtung nach einem beliebigen der Ansprüche 1 bis 3, **dadurch gekennzeichnet, dass** das Mittel (4) zum Einspritzen von Kohlenwasserstoffen, das Mittel (2) zur Behandlung von Kohlenwasserstoffen und das Mittel (3) zum Einfangen von NOₓ in einer Abzweigleitung (9) der Hauptabgasleitung vorgesehen sind, und daß sie zusätzlich ein Mittel (11) zum Modulieren der Durchflussmenge der Gase zwischen der besagten Abzweigleitung (9) und der Hauptleitung (10) umfasst.

5. Vorrichtung gemäß einem beliebigen der vorhergehenden Ansprüche, **dadurch gekennzeichnet, dass** sie zusätzlich mindestens einen Temperaturaufnehmer (5) umfasst.

6. Vorrichtung gemäß dem Anspruch 5, **dadurch gekennzeichnet, dass** der besagte Temperaturaufnehmer (5) stromaufwärts der besagten Mittel (2) zur Behandlung der Kohlenwasserstoffe vorgesehen ist.

7. Vorrichtung nach einem beliebigen der vorhergehenden Ansprüche, **dadurch gekennzeichnet, dass** sie zusätzlich ein Mittel (8) zur Messung der in dem Mittel zum Einfangen (3) eingefangenen NOₓ -Menge umfasst, welches stromabwärts der Mittel (3) zum Einfangen des NOₓ angeordnet ist.

8. Vorrichtung nach einem beliebigen der vorhergehenden Ansprüche, **dadurch gekennzeichnet, dass** sie einen zweiten Temperaturaufnehmer (6) umfasst, welcher stromabwärts der besagten Mittel (2) zur Behandlung der Kohlenwasserstoffe angeordnet ist.

9. Vorrichtung nach einem beliebigen der Ansprüche 7 bis 8, **dadurch gekennzeichnet, dass** das Mittel (7) zum Messen des Gehaltes der Abgase stromabwärts von dem Mittel (3) zum Einfangen des NO_{X} vorgesehen ist.

10. Vorrichtung nach einem beliebigen der Ansprüche 7 bis 8, **dadurch gekennzeichnet, dass** das Mittel (7) zum Messen des Gehaltes der Abgase zwischen dem Mittel (2) zur Behandlung der Kohlenwasserstoffe und dem Mittel (3) zum Einfangen der NOₓ vorgesehen ist.

11. Vorrichtung gemäß dem Anspruch 10, **dadurch gekennzeichnet, dass** das Mittel (7) zum Messen des Gehaltes der Abgase stromaufwärts des zweiten Temperaturaufnehmers (6) angeordnet ist.

12. Vorrichtung nach einem beliebigen der vorhergehenden Ansprüche, **dadurch gekennzeichnet, dass** sie zusätzlich ein Mittel (12) zum Vorheizen der Gase umfasst, welches stromaufwärts der Mittel (2) zur Behandlung der Kohlenwasserstoffe angeordnet ist.

13. Verfahren zur Beseitigung von Stickoxiden in einer Abgasleitung (1) für Verbrennungsmotoren, welche mit magerem Gemisch laufen, **dadurch gekennzeichnet, dass** es besteht aus:
- Einfangen der NOₓ in einem geeigneten Mittel (3);
- Einspritzen der zusätzlichen Kohlenwasserstoffe in die Abgasleitung durch ein Mittel zum Einspritzen (4), welches in der Abgasleitung vorgesehen ist, in Abhängigkeit der verschiedenen Betriebsparameter des Motors und des Sättigungszustands des besagten Mittels (3) zum Einfangen der NOₓ;
- partielles Oxidieren der Kohlenwasserstoffe in einem speziellen Mittel (2);
- Regenerierung des besagten Mittels zum Einfangen von NOₓ (3) mittels der Produkte der Oxidierungen der eingespritzten Kohlenwasserstoffe.

14. Verfahren gemäß dem Anspruch 13, **dadurch gekennzeichnet, dass** man die in dem Mittel (3) zum Einfangen der NOₓ gespeicherte NOₓ-Menge überwacht.

15. Verfahren nach einem beliebigen der Ansprüche 13 oder 14, **dadurch gekennzeichnet, dass** man die Temperatur der Gase stromaufwärts und/oder stromabwärts der Mittel (2) zur Behandlung der Kohlenwasserstoffe überwacht.

16. Verfahren nach einem beliebigen der Ansprüche 13 bis 15, **dadurch gekennzeichnet, dass** man den Gehalt der Gase stromaufwärts und/oder stromabwärts des mittels (3) zum Einfangen der NOₓ überwacht.

17. Verfahren nach einem beliebigen der Ansprüche 13 bis 16, **dadurch gekennzeichnet, dass** man die besagten zusätzlichen Kohlenwasserstoffe, wenn das Mittel (3) zum Einfangen der NOₓ gesättigt ist, die Temperatur (T1) der Abgase oberhalb eines Schwellwertes (TR), für welchen das Mittel (2) zur Behandlung der Kohlenwasserstoffe aktiv ist, liegt, damit der Gehalt (λ) der Abgase größer oder gleich ist einem vorgegebenen Gehalt (AR), welcher die Regenerierung des Mittels zum Einfangen (3) auslöst.

18. Verfahren nach einem beliebigen der Ansprüche 13 bis 17, **dadurch gekennzeichnet, dass** man die besagten Kohlenwasserstoffe während einer Zeitdauer (dR) einspritzt, welche unterhalb einer abgespeicherten, vorbestimmten Zeitdauer (dRMAX) liegt.

19. Verfahren nach einem beliebigen der Ansprüche 13 bis 18, **dadurch gekennzeichnet, dass** man die Durchflussmenge der Abgase zwischen einem Hauptweg (10) und einer Abzweigleitung (9) von dem besagten Weg (10) moduliert.

20. Verfahren nach dem Anspruch 19, **dadurch gekennzeichnet, dass** man die Abgase vor deren partieller Oxidierung in der besagten Abzweigleitung (9) aufheizt.

21. Verfahren nach einem beliebigen der Ansprüche 13 bis 20, **dadurch gekennzeichnet, dass** man die Regenerierung in Abhängigkeit von der von einem Aufnehmer, wie zum Beispiel einer Gehaltssonde, welcher stromabwärts der Mittel (3) zum Einfangen der NOₓ angeordnet ist, bereitgestellten Daten abbricht.
